# EUROPEAN PATENT APPLICATION

(11) **EP 1 748 006 A1**
(43) Date of publication of application: **31.01.2007**
(21) Application number: 06014392.2
(22) Date of filing: 13.07.2006
(51) Int. Cl.: B65G 47/08

(54) **Automatic variation device for the axial position of rolls assembled on a shaft, particularly a shaft of a packing machine loaded with rolls of adhesive and unadhesive band**

(30) Priority: 27.07.2005 IT MI20051454
(71) Applicant: Guzzetti SpA, 22078 Turate CO (IT)
(72) Inventor: Guzzetti, Mario, 22078 Turate (Como) (IT); Guzzetti, Franco, 22078 Turate (Como) (IT); Guzzetti, Gabriele, 22078 Turate (Como) (IT)
(74) Representative: Di Iorio, Giuseppe

(57) **Abstract**

This device is associated to a shaft (A) on which there are assembled spacing rolls (R1... R17) that can be moved axially if submitted to an axial thrust.

In a preferred embodiment, the device includes two combs (P, P') located around the shaft with a 180° spacing, suitable for making, by the automatic control of a pneumatic piston, traverses for approaching to and moving away with respect to the shaft and each comb is provided with a plurality of forks (F1..F8 and F1'...F8') suitable to make, using the automatic control of related electric motors (M1..M8 and M1'...M8'), independent axial traverses, in a direction suitable to drag and position the rolls (R1... R17) at the wished distance and, in the opposed direction, for being brought again to the rest position. The automatic intervention of control means for combs and forks is coordinated by an electronic apparatus running according to prefixed programs.

It is foreseen a parking zone in which there are transferred the forks that are not engaged with rolls (unoperative forks).

The invention is shown in Figure 4 - Pos. d.

## Description

This application for invention patent refers, in general, to a variation device for the axial position of rolls in a group of rolls mounted spaced on a shaft and sliding onto the same shaft if submitted to an axial thrust.

The invention refers, in detail, to spacing devices for rolls of a roll group mounted on the loading shaft of packing machines for rolls and, in detail, for rolls of adhesive and unadhesive band.

As it is well-known, in particular in the field of industrial band machines, it is occurred frequently the problem to adjust the distance between the rolls to be packed supported on a shaft, for satisfying the requirements of production type and mainly for keeping in count the final packing type that the packing machine shall supply.

In fact it is well-known that, for getting a good roll packing, the above mentioned distance must consider the external roll diameter in single packings or the insulation required between a roll and the following roll or between roll groups in multiple packings in the form of accordion or of multiple tower.

Considering the conventional packing machines, the problem of spacing between rolls is solved providing the machines with a structure having a part in cradle form supplied with grooves that is the so-called comb, suitable for receiving and position, at an established distance, the rolls supplied by a feeding device before transferring them to the machine loading shaft for the packing operations.

It is understood, in this case, what is the system drawback joined to the feeding of rolls positioned only at an established distance between one another: each time the machine must produce different types of roll packings that require a particular, specific spacing with one another, it is necessary to make the replacement of the comb part inserted with another comb part that has grooves spaced by a distance suitable for the different packing type.

It was tried to eliminate the drawback using combs with manually adjustable grooves to vary its reciprocal distance and, in the same manner, the distance between the rolls, but also this solution has not given any positive result as the applied system causes a great time loss that influences the machine productivity and further a loss of precision in determining the distances and a positioning limitation.

A first aim of this invention is to provide a variation device for the axial position of rolls mounted on a shaft, in particular on the loading shaft of a roll packing machine that can run as distance adapter or as approaching device for single rolls or roll groups in relation to the packing type that is wished, by the automatic intervention of control means controlled by a computer system of an electronic apparatus set-up according to pre-established programs.

Another aim of the invention is to provide a device of the type having a modular running, that is to say, suitable for engaging its members by the measure strictly necessary for the specific treatment that it must apply on the rolls loaded on the shaft.

According to the invention, the above mentioned aims are get by an automatic variation device of the axial position of rolls supported on a shaft, characterized by one or more mobile combs, parallel to the shaft, located on a circumference and equidistant around this shaft, and that, starting from an initial rest position far from the shaft, can make, by a control, traverses perpendicular to this shaft, for approaching to and in the following for moving away from the same shaft for bringing them again to the rest position and characterized in that each comb is supplied with a plurality of (teeth in fork form) forks held onto the comb body by means of a guide parallel to the shaft, along which each fork can, make, by a specific and independent control, starting from an initial rest position and after the end of the approaching and moving away comb stroke with respect to the shaft, respectively, axial traverses in a direction (work stroke) with dragging of the roll or of rolls and in the following in a contrary direction (return stroke) for bringing them again to the rest position.

In a better detail, during each roll treatment cycle, the combs and the forks make, in ordered manner, the following movements:
a) contemporaneous approaching of the combs to the shaft together with the forks until to insert the fork or forks foreseen for being engaged with rolls (operative forks) between a roll and the following one or roll groups and/or to locate the fork or forks in one or in both ends of the roll group assembled on the shaft, by the automatic intervention of own control means for the traverses;
b) independent axial traverse, in a direction or in the other one, of the forks inserted between the rolls and/or located at one or at both ends of the roll group, with contemporaneous roll dragging along a path or stroke depending on the final configuration or trim that the single rolls or roll groups shall reach in the roll packing that the machine shall supply, by automatic contemporaneous intervention of respective control means for causing the traverses;
c) contemporaneous moving away of combs from the shaft by an stroke opposite to the traverse for approaching to the shaft until to bring the combs to the initial rest position together with forks, again by automatic intervention of own control means;
d) independent axial traverse of forks already engaged with rolls along a path inverse to the one of roll dragging until to rebring forks to the initial rest position, again by the contemporaneous automatic intervention of related control means.

The automatic intervention both of control means for the comb traverses and of single forks is coordinated by a computerized system of an electronic apparatus set-up according to prefixed programs.

Using a device made as above mentioned and associated to the loading shaft of a packing machine, the comb structure of the same machine foreseen for positioning the rolls arriving from the feeding, can again continue to transfer the rolls to the loading machine shaft at the established distance, but it shall be no more necessary its replacement when the machining requirements change, as the distance adjustment operations between the rolls and also its grouping or approaching according to the final configuration of wished packing, shall be made directly and automatically by the device that forms the invention object, by the coordination of the computerized system.

Further, for allowing to adjust the machine for satisfying its member engagement to the real requirements necessary to make a specific operation, the invention foresees that the forks in excess with respect to the ones that are strictly necessary, together with the control means, are transferred, for the whole time in which they do not work, to a parking zone located at one o at both sides of the sliding guide, where they remain in rest, in fixed axial position, without interfering with the rolls also during the comb traverses, by which they are dragged and that the related control means of forks in excess are activated solely during the fork transferring to the parking zone and during the return to initial rest position or normally when the forks return to be in the number of those (operative forks) cooperating with rolls.

In this manner, the reserve forks and annexed parts are excluded for the whole parking time from any axial movement with following elimination of entanglement drawbacks and other drawbacks caused by members in movement.

It is further important to note that the provision of a parking zone allows to get a over-dimensioning of the fork number for each comb, as the device can use the reserve combs for satisfying, within some limits, the increasing number of rolls loaded on the shaft.

Further details and advantages of the device according to the invention shall be noticed now in evident manner by the following description that refers, with the sole example aim and without any limiting character, to the annexed drawings that show one of its preferred fulfilment in a packing machine for rolls of adhesive and unadhesive band. In the drawings:

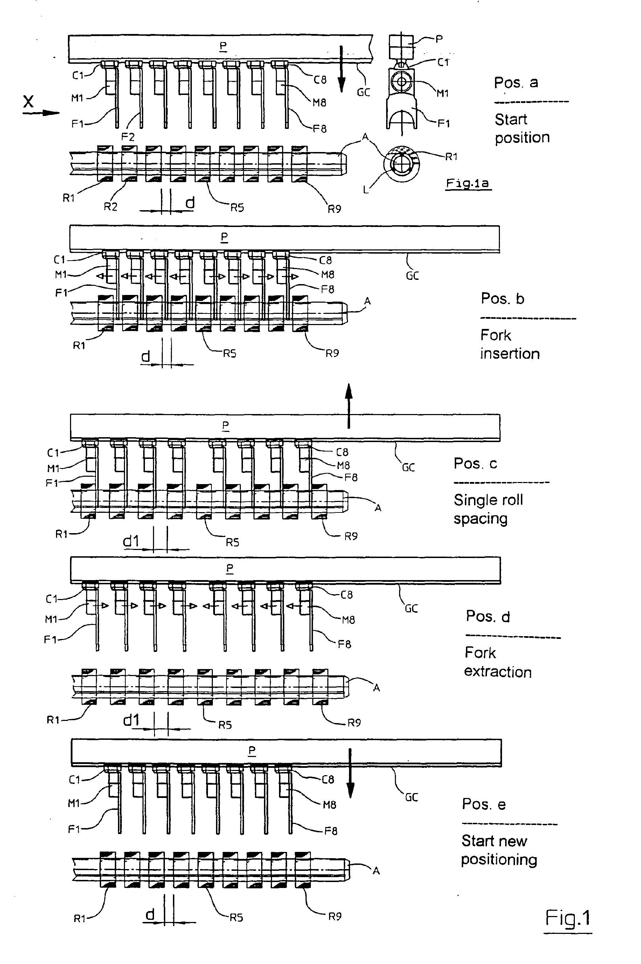

Figure 1 shows the schematic representation of the device according to the invention provided with one sole comb, running as roll spacer and in which the forks, the comb and the rolls are represented in the different positions reached during a roll treatment cycle;
Figure 1 a is the view according to the arrow X of the device in Figure 1 - Pos. a;
Figure 2 is a representation of the device similar to the device in Figure 1 running as grouper (approaching device) and spacer of roll groups;
Figure 3 is again a representation of the device similar to the device in Figure 1, running as grouper of single rolls;
Figure 4 is a schematic representation of the device according to the invention, provided with two combs and in which the forks are represented in the engagement position with rolls;
Figure 4a is the view according to the arrow Y of the device in Figure 4 - Pos. d;
Figure 5 is the schematic front view of the control mechanism for the comb traverses in a device provided with two combs with the various parts represented in disengagement position of the forks loaded with rolls;
Figure 6 is the section according to the line VI-VI of the control comb mechanism shown in Figure 5;
Figure 7 is the schematic front view of the control mechanism for the axial fork traverses in a device provided with two combs with the various parts represented in disengagement position of the forks with rolls;
Figure 8 is the view according to the arrow A of the control mechanism of forks in Figure 7.

With reference to the Figures 1, 2 and 3, it is indicated by A the shaft on which there are assembled the packing rolls R1, R2, ... R9 that, with the sole aim of example, are nine in number. According to a known manner, the rolls are kept in position on the shaft by the effect of an elastic radial thrust applied on them from the inside, by means of one or more axial lists L (see Figure 1 a), whose action, nevertheless, is not suitable to lock traverses along the shaft if they are submitted to an axial thrust. The rolls, positioned with one another at an established distance d, are supplied in this layout by a positioning comb that, on its turn, has received them from a feeding device, the one and the other one being known and not represented in drawings. In the following description, the shaft A is considered as the loading shaft of a packing machine for rolls, in particular for rolls of adhesive and unadhesive band and the modes of assembly of rolls on the shaft can be advantageously the ones described in the application of Italian patent No. MI2005A 001332, filed on 30th June 2005, also in the name of the Applicant, and to which it is made reference for each updating. Here it is specified only that the above mentioned application shows that the roll loading operation on the shaft is made by the insertion of the used shaft into the holes of rolls located aligned on the positioning comb.

The present invention suggests in particular a device suitable to change automatically the above mentioned distance d between the rolls assembled on the shaft, having any wished value, higher or lower than d, and further to adjust to zero this distance, in relation to the type of roll packings that the packing machine shall supply according to precise programs set in the electronic apparatus and activated, everytime, by the operator.

According to the invention and always with reference to Figures 1, 2 and 3, the device includes, in combination with the roll group R1, R2....R9, a mobile comb P located parallel to the shaft A and provided with a plurality of blade teeth F1, F2... F8 with the ends shaped in fork form, and for this reason termed in the following simply as forks, that are eight in number in the hypothesis made of nine rolls assembled on the shaft.

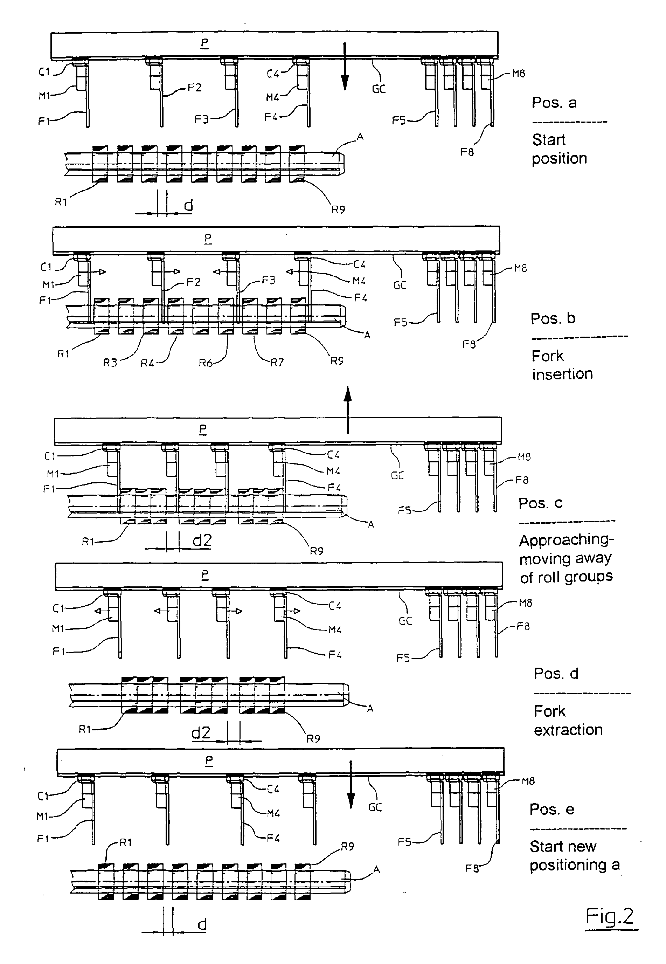

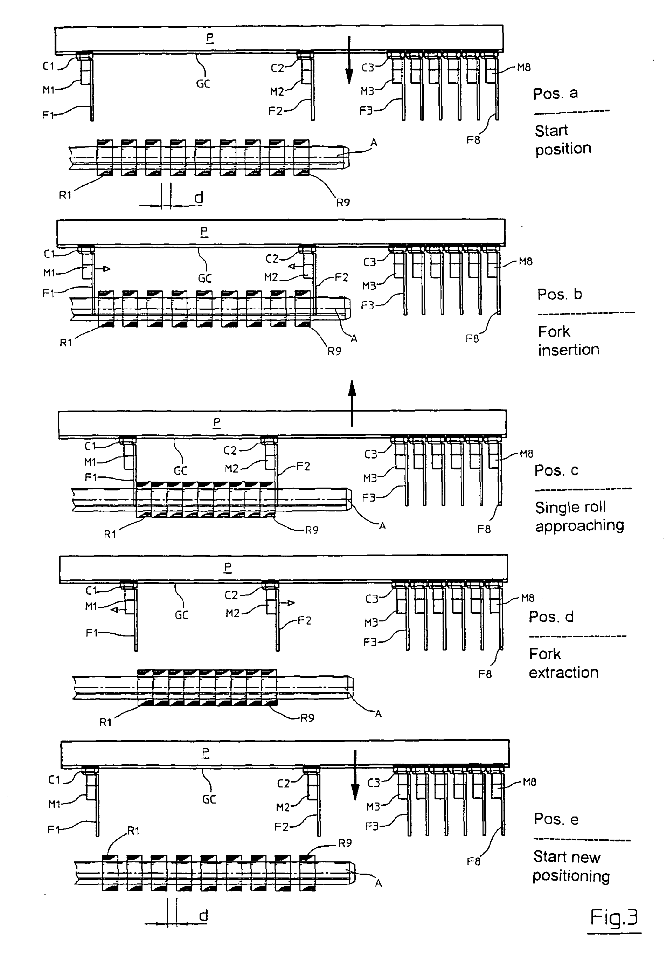

The comb P, together with forks F1... F8 can make, by the automatic-intervention of own control means, traverses perpendicular to the shaft A, approaching them to the same shaft until the forks are inserted between the single rolls (see Pos. b - Figure 1) or between the roll groups (see Pos. b- Figure 2) and/or approaching at least to both extreme group sides (see Pos. b - Figures 2 and 3) and in the following, moving away from the shaft for reaching again the initial rest position.

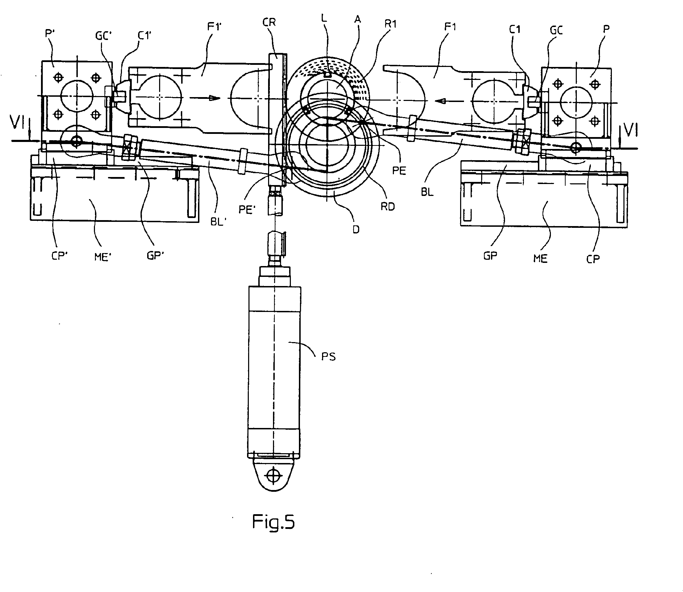

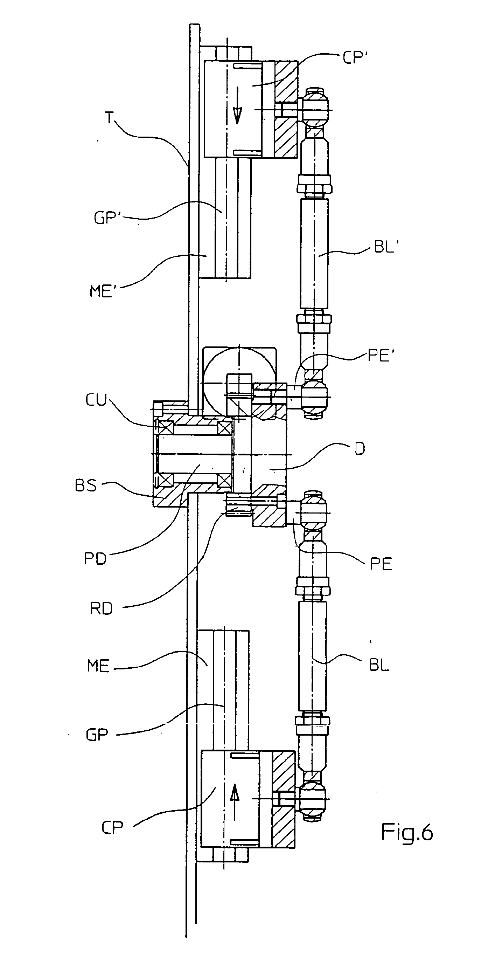

The control means of the comb include, as main component, a pneumatic piston and shall be described in the following with reference to Figures 5 and 6 related to a device provided with two combs in fork disengagement position.

The forks F1... F8 are kept onto the comb body P by means of respective trolleys C1....C8 sliding in a guide GC, parallel to the shaft A, fixed to the comb body. Each trolley is joined, in addition to the single fork, also to means that control its axial traverses, in a direction or in the opposite one, so that a plurality of groups, in the example eight in number, each one including a trolley, a fork and the respective control means, can slide along the guide GC, the one independent from the other one, by the intervention of respective control means.

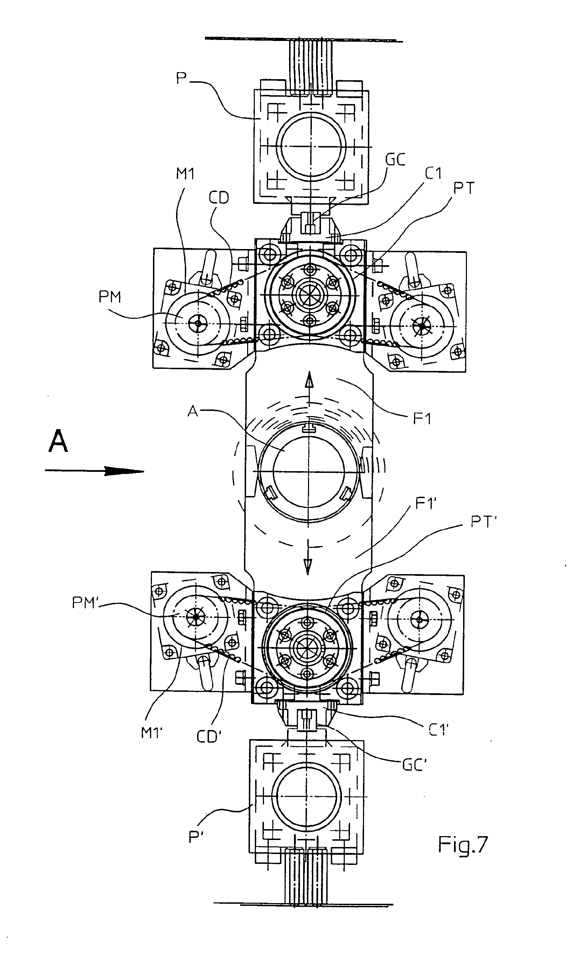

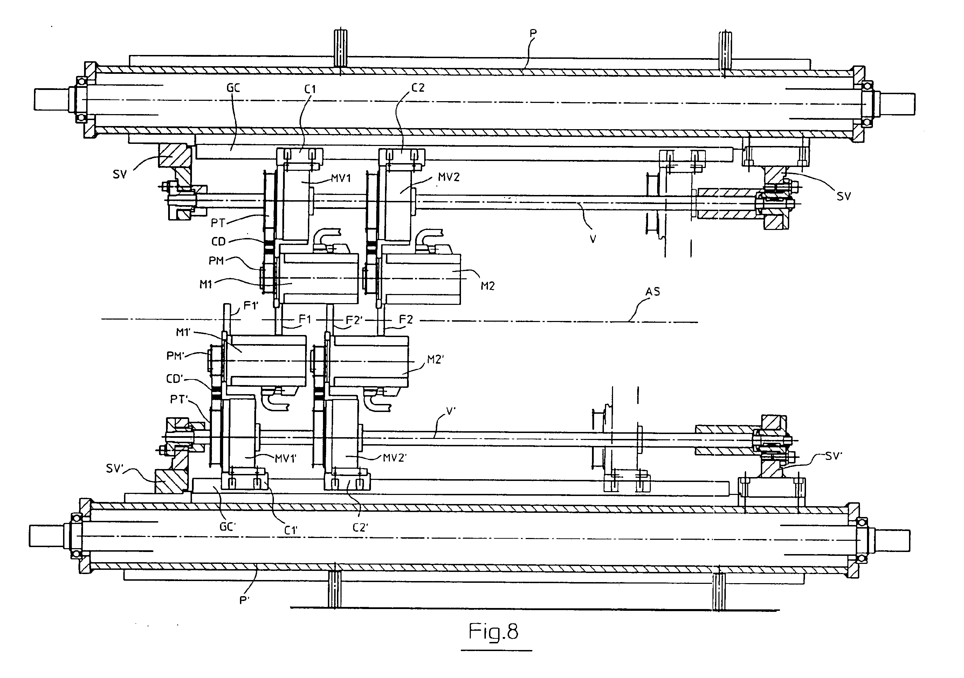

These control means include for each fork, as main component, an electric motor M1, M2... M8, respectively, for the forks F1, F2... F8 and they shall be described in the following with reference to Figures 7 and 8 related to a device provided with two combs in engagement position of the forks.

Now it is described the handling of comb, of forks and rolls in Figure 1 with reference to the different positions, Pos. a, Pos. b; pos. c and Pos. d assumed by these parts during a roll treatment cycle.

It must be noticed that the layout and the handling position of forks shown in this Figure 1 form a first embodiment of the device and precisely of the device running as distance adapter between the single rolls.

### Pos. a - Figure 1

The comb P and the forks F1... F8 are in rest or start position of the cycle and are far from the shaft A supporting the rolls R1... R8. In detail, the forks are located one near the other one and each one on a plane passing by the center line of a roll couple, each one of which, as said, is positioned at an established distance d from the other one, that is the distance by which they are spaced on the positioning comb.

This fork layout and also the handling of the various parts, shall be considered as an execution of a certain program, for example, Program 1 activated by the operator acting on the computerized system of the electronic apparatus, also this not shown in drawings and that can be of any known type on condition that it is suitable for the aim.

The Program 1, naturally, already presumes a precise selection of the roll packing type that the packing machine shall supply. Really, the packings that the machine can produce with this fork layout, are of two types: single packings in which an envelope, made-up with a film of suitable material, wraps a single roll or multiple packings in accordion form, in which a sole packing wraps more rolls spaced with one another. For further details on this matter, it is made reference to the above mentioned patent application.

The view according to Figure 1 a shows, in addition to the comb/trolley/shaft assembly with rolls, the elastic lists L, the electric motor M1 that is the main component of the control means of each fork and the end of each of them has a sufficient development for being able to wrap sufficiently the shaft A and offers a sufficient contact surface with the roll that shall push for obtaining the whished spacing.

The downwards arrow applied on the comb P indicates the next traverse that the same shall make together with the forks and that is made for approaching to rolls for the running cycle start.

### Pos. b - Figure 1

It is the position reached by the comb P with the forks F1...F8 at the end of above mentioned traverse by the automatic intervention of own control means. The position corresponds to the insertion position of forks between the rolls (engagement position) that are still spaced by the distance d.

The arrows indicated on a side of forks, in a direction for some of them and in opposite direction for other ones, show the next axial traverse that the same ones shall make singularly by the intervention of respective control means.

### Pos. c - Figure 1

It shows the new position assumed by rolls R1... R9 on the shaft after its axial traverse caused by the respective fork push, by the intervention of respective control means running contemporaneously. The traverse, naturally interests not only the forks but the entire group (trolley and control means), each of which forms a part.

The new distance d1 between the rolls, in this case higher than d, is established by the program 1 and its value, set as the other ones, in the computerized system of the electronic apparatus, depends on the external roll diameter in the case of single packings or by the space (interval) of insulation required between the rolls in the case of multiple packings in accordion form. In each case, d1 shall be as greater as greater is the external roll diameter or the insulation distance required between the rolls. For better details on this argument it is made again reference to the preceding patent application.

The upwards arrow applied on the comb P, having opposite direction to arrow of Pos. a, shows the next comb traverse that is the moving away from rolls.

### Pos. d - Figure 1

In this position the forks F1... F8, following the comb P traverse, that has dragged them upwards by the intervention of its control means, are disengaged (detached) from rolls R1... R9, but they are still in position moved axially with respect to the start position, Pos. a.

The arrows shown on the forks of direction opposite to the ones indicated in Pos. b, show really the next axial traverse that the forks shall make, at the cycle end, for assuming again the rest position, Pos. a.

### Pos. e - Figure 1

It corresponds to the final position of forks or initial new start positioning. Pos. a. It is reached by the forks together with related groups, following the axial traverse of the forks according to arrows of Pos. d, by the automatic intervention of related control means put in service contemporaneously. At the end of above mentioned traverse, the packing machine shall move the shaft A with rotors R1....R9 positioned at the wished distance d1, to the following work stations for making further treatments onto the walls until its discharge, as said, in single or multiple accordion packings, while another shaft, loaded with new rolls at a distance d, shall be transferred before the forks in start position, for the start of a new treatment cycle.

It was seen by the Pos. b and Pos. d in Figure 1 that the axial traverse direction of some forks and then of some rolls is opposed to the traverse of other forks and other rolls, and further that one of intermediate rolls and precisely the roll R5, was not moved by any fork and then it is stopped in the initial rest position, Pos. a.

This situation is made possible thanks to the fact that each fork, as said, is provided with own control means and, therefore, each of its axial move and move direction, together with the group to which it belongs, is independent from the one of other forks, although they can be all controlled contemporaneously.

Nevertheless, it is clear that the fork handling modes and following roll traverse are not binded to what described and represented and then they can be changed according to the practical requirements and, in any case, they will correspond to precise programs set-up in the computerized system of electronic apparatus.

The devices represented schematically in Figures 2 and 3 form, respectively, a second and third embodiment of the device according to the invention, but correspond, in the structure, again to the device of Figure 1. The sole difference is the fact that it is different, in the devices of said Figures 2 and 3, the number of forks cooperating with rolls, in the following termed operative forks, the start layout of the same forks and its axial traverse direction during the roll positioning, as shown in Pos. b and d.

In detail, in Figure 2 only four forks F1, F2, F3, F4 cooperate with rolls, respectively, R1, R4, R6 and R9, the remaining forks F5....F8, in the following termed as reserve forks, are on the contrary transferred to a parking zone, to one end side of the guide GC.

Similarly, in the Figure 3 only two forks F1, F2 are engaged with rolls, respectively, end rolls R1 and R9 of the roll group, while the remaining forks F3... F8 are transferred to the parking zone.

This depends on the different roll packing type that it is wished to obtain from the packing machine, that, in the case of Figure 2, shall produce packings in multiple tower form, that is to say packings in which a film envelope will wrap more roll groups spaced with one another and each of them being formed by some rolls, while in the case of Figure 3 the machine shall produce packings in single tower form that is to say packings in which an envelope will wrap more rolls assembled together.

Further it shall be clear that the devices of Figures 2 and 3 run, respectively, the one as assembling device of roll groups and spacer of the same groups, and the other one only as assembling device of single rolls. In fact, in Figure 2 - Pos. b, the intermediate opposed arrows applied on the side of forks F2 and F3 indicate the lock towards the centre of the central group of three rolls R4... R7 and the external arrows, also they being opposite, indicated near the forks F1, F4, indicate the assembly towards the internal side of two lateral groups of three rolls, respectively, R1... R3 and R7...R9, while in Figure 3 - Pos. b the opposed external arrows indicated near the forks F1 and F2 indicate the lock towards the centre of the whole group of rolls R1... R9. Further, in both the Figure 2 Pos. c and Figure 3 - Pos. c, each operative fork acts onto a roll that, on its turn, transmits the push to the adjacent rolls for causing its assembly.

In Figure 2 - Pos. c and d it will be noticed that the central roll group is separated from the lateral one by a distance d2 that shall be established in relation to the external diameter of rolls for getting a good packing in multiple tower form. In this case the device runs, then, also as spacer of roll groups.

The assembly of all of rolls as shown in Figure 3 - Pos. c and Pos. d shall bring on the contrary to the production of packings in single tower form.

The parking position shown in Figures 2 and 3 allows to cut off from the device running the reserve and unoperative forks that, in any case, remain at disposal in the case the packing machine is required to produce again single packings with rolls spaced as shown in Figure 1.

The unoperative forks in parking zone are in any case dragged by the comb during its traverses of approaching and moving away with respect to the shaft, without interfering with rolls with this movement.

Further the control means of each reserve fork remain disengaged for the whole time in which the same forks are stopped in the parking zone for being momentaneusly put in running for controlling its traverse towards and from said parking zone and further, for controlling normally the normal fork traverses when the same forks return to be the operative forks.

Further it must be noticed that all of forks, in machine rest position or at the start of each new production, are located in the parking zone from which they are brought again to the operative zone, in necessary number, at the start position of the device for executing a new roll treatment.

The possibility to have a parking zone for unoperative forks allows also to foresee on the comb a number of forks hardly higher than the one strictly required, as the device can use, within some limits, the reserve forks in the case the roll loading on the shaft exceeds the normally foreseen loading.

It is clear that also the number, the fork layout and handlings in Figures 2 and 3 shall be established automatically by the programs installed in the computerized system of the electronic apparatus, therefore the operator shall start a specific program, for example, the Program 2 for the running of the device according to Figure 2 and a specific other program, for example, the Program 3 for the running of the device according to Figure 3.

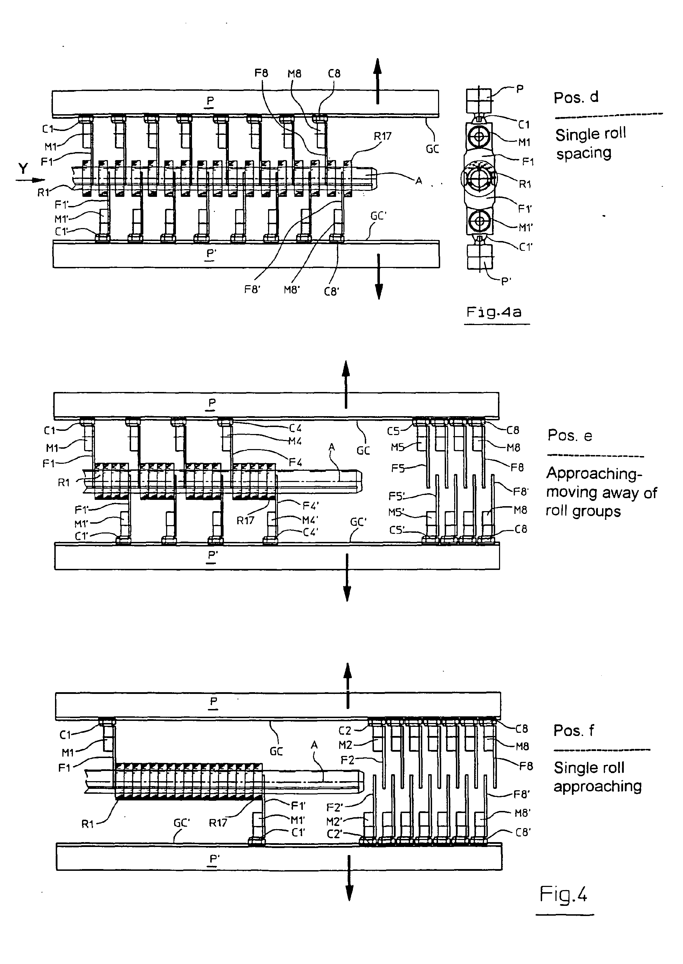

The device represented in Figure 4 is notably different from the ones of Figures 1, 2 and 3 as it includes two combs P, P' instead on one only, located at 180° with one another and further as on the shaft A there are assembled 17 rolls R1....R17, naturally this occurs in the hypothesis that each comb is provided with eight forks. It is also obvious that, with respect to preceding devices that are shown, its productivity shall be higher owing to the increased roll number.

In this Figure 4 there are used the same reference symbols for parts and positions corresponding to the ones of devices of Figures 1, 2 and 3 with the variant that the similar parts of the second comb P' are marked with an added apex (').

Therefore, the forks of the combs are indicated again by F1..F8 for the comb P and by F1'... F8' for the comb P'. The forks of a comb are, on the contrary, on a plane different from the plane of forks of the other comb, so that, when they are in engagement position, only one fork of one of the two combs shall be in touch with the roll or roll group to be moved axially, as shown in the Pos. d; Pos. e; and Pos, f of said Figure 4 that correspond to the Pos. c of the Figures 1, 2 and 3.

Likewise to Figure 1 a, also Figure 4a shows, in addition to trolleys C1, C1', to forks F1, F1' and to roll R1, the electric motors M1, M1' forming a part of control means of each fork.

As regards the handling of the various parts and the running of the parking zone, it is valid what said for the devices of Figures 1, 2 and 3.

Here it is suitable to confirm that the packing machine shall be able to produce:
- Single packings in the fork insertion position (or engagement position), Pos. d;
- Packings in multiple tower form in the position of approaching/ moving away of roll groups, Pos. e, and finally
- Packings in single tower form in the approaching position of single rolls, Pos. f.

Now it shall be shown the control means for combs and single forks with reference, respectively, to Figures 5, 6 and 7, 8 related, as precedently indicated, to devices having two combs. Also the description of these figures holds the same reference symbols of the corresponding parts represented in preceding figures.

### Control means for combs - Figures 5, 6.

These means can control the approaching or moving away traverses of the combs with respect to the shaft and, include, in addition to the pneumatic piston PS fixed to the machine framework T, a movement transmission mechanism from the piston to the combs, which transmission mechanism is of the connecting rod and crank type; the connecting rods are two in number, one rod BL of them being joined to the comb P and the other rod BL' being joined to the comb P'.

The movement transmission to each connecting rod occurs by means of a rack CR joined to the plunger stem, which is engaged, on its turn, with a gear RD forming a sole body with a disk D provided with two pins (cranks) PE, PE' for the articulated connection with the connecting rod big ends (see Figure 6). On its turn, the disk D is provided with a pin PD that is assembled rotating into a bush BS fixed to the framework T, by means of bearings CU, so that they allow the rotation of the gear by which it is dragged during the piston running.

Each connecting rod small end is then joined by articulated joint to a comb-holder trolley CP, CP' sliding in a guide GP, GP' supported by a bracket ME, ME' fixed also to the framework T.

There are also indicated by the same symbols the forks F1, F1', dragged by the related trolleys C1, C1', the shaft A with elastic lists L and the roll R1.

During the running of the piston PS, the connecting rods BL, BL' are moved towards inside or towards outside approaching or moving away the forks F1, F1' with respect to the shaft A so that they are brought, respectively, in insertion positions or in disengagement positions with rolls. Figure 5 shows that the connecting rods are moved towards outside and, then, with the forks in disengagement position.

### Control means for forks - Figures 7 and 8

They are the means that can control the axial fork traverses and, as above mentioned, include, for each fork, in addition to the electric motor M1, M1', a control transmission mechanism for the fork -holder trolley C1, C1, of the screw-nut and screw type.

In detail, this control transmission is made-up by means of a toothed belt CD, CD' driven by the toothed pulley PM, PM' of the motor that, on its turn, drives in rotation a toothed pulley PT, PT' joined to a nut screw MV, MV' (scroll screw) engaged with a worm screw V, V' fixed to the body of the comb P, P', on which the pulley PT, PT' is also assembled idle.

The nut screw, the pulleys, the motor and the fork are joined to the trolley C1, C1' and form a sole group used for obtaining the movement so that, during the motor running, being the screw V, V' fixed, the nut screw MV1, MV1' shall screw on this screw and shall be moved along its axle dragging with itself, in a direction or in the other one, the group (fork/motor/pulley) forming a part of the trolley sliding in a guide GC, GC' fixed to the comb body.

The above mentioned Figures 7 and 8, as a sole example title, represent, for each comb, only two fork couples F1, F1'; F2, F2' belonging to the fork plurality assembled around the shaft and, together with each of them, the related groups. The shaft axle is indicated by AS.

The worm screws V, V' are two in number for each comb and each of them is supported by a couple of lateral supports SV, SV' fixed, respectively, to the comb body P, P'.

Finally it must be underlined that the device of Figures 1-8 has a very simple, very precise construction and has a quick running so that in few seconds it can make all of roll axial traverse types. Owing to this execution quickness it has shown particularly suitable for being assembled on the loading shaft of the modern packing machines for rolls of adhesive and unadhesive bands, running at high speed and with high productivity, as the one forming the object of the above mentioned patent application, in which each treatment phase of rolls does not exceed a duration of three seconds (3").

The preceding description refers to a particular variation device for the axial distance between rolls, but it is clear that variants and modifications can be made by the expert of the field to the considered embodiment, without going out of the field of invention.

## Claims

1. Axial position variation device for rolls of a roll group mounted spaced on a shaft and sliding on the same shaft if submitted to an axial thrust, particularly for a loading shaft for packing machines for rolls of adhesive and unadhesive band, **characterized in that** it includes one or more mobile combs, parallel to the shaft, located on the circumference in equidistant position around this last one and suitable, under control, to make, starting from an initial rest position far from the shaft, traverses perpendicular to this last shaft, for approaching to and in the following for moving away from the shaft for being brought again to the initial rest position and **characterized in that** each comb is provided with a plurality of forks (teeth in fork form) joined to the comb body by means of a guide parallel to the shaft along which each fork can, under specific and independent control, make, starting from a rest position and after the stroke end for approaching and the stroke for moving away the combs with respect to the shaft, respectively axial traverses in a direction (going stroke) with dragging of roll or of rolls and in the following in contrary direction (return stroke) for bringing again in rest position and that, during each roll treatment cycle, the combs and the forks make automatically, in succession, the following handlings under the coordination of computerized system of an electronic apparatus set-up according to pre-established programs;
a) contemporaneous approaching of the combs to the shaft together with the forks until to insert the fork or forks foreseen for being engaged with rolls (operative forks) between a roll and the following one or roll groups and/or for locating the fork or forks in one or in both ends of the roll group assembled on the shaft, by the automatic intervention of own control means for the traverses;
b) independent axial traverse, in a direction or in the other direction, of the forks inserted between the rolls and/or located at one or at both ends of the roll group, with contemporaneous rolls dragging along a path or stroke depending on the final configuration or trim that the single rolls or roll groups shall reach in the roll packing that the machine shall supply, by the automatic contemporaneous intervention of respective control means causing the traverses;
c) contemporaneous moving away of combs from the shaft by a stroke opposite to the traverse for approaching to the shaft until to bring the combs to the initial rest position together with forks, again by automatic intervention of own control means; and finally,
d) independent axial traverse of forks already engaged with rolls along a path inverse to the one of roll dragging until to rebring forks in the initial rest position, again by the contemporaneous automatic intervention of related control means.

2. Variation device of roll axial position according to claim 1, **characterized in that** the forks in excess (reserve forks) with respect to the ones that are strictly necessary for making the required axial traverses, together with the respective control means, are transferred, for the whole duration of each production type, to a parking zone, located in one side or in both sides of the sliding guide, where they remain in rest, in fixed axial position, without interfering with the rolls also during the comb traverses, by which they are dragged, and **characterized in that** the control means of traverses of forks in excess are activated during the transferring of forks to a parking zone and during the return to initial rest position or normally when the forks return to be in the number of forks (operative forks) cooperating with rolls.

3. Variation device of roll axial position according to preceding claims, **characterized in that** the in machine rest position or at start of each new production, all of forks and related groups remain in parking position for being brought again in operative zone, in the necessary number, at the device start for the execution of a new roll treatment.

4. Variation device of roll axial position according to claims 1, 2 and 3, **characterized in that** the combs are two in number and located at 180° with one another and that the control means of its traverses perpendicular to the shaft are obtained by a pneumatic piston mounted on the machine framework that controls the traverses of combs by means of a transmission mechanism including a rack device acting onto the combs through a double connecting rod and crank.

5. Variation device of roll axial position according to claims 1, 2 and 3, **characterized in that** the control means of axial traverses of single forks are obtained by related electric motors, each one supported by a trolley sliding on a comb body guide parallel to the shaft and that drags the related fork (operative or reserve forks) by a mechanism of the worm screw type, with nut screw (scroll) engaged with the screw fixed to the comb body; each fork, electric motor, transmission members and nut screw forming an axially mobile group, joined to the related trolley.

6. Variation device of roll axial position according to preceding claims 1, **characterized in that** it is operatively coupled with the loading shaft of the roll packing machine of adhesive and unadhesive bands, object of the Italian patent application No. MI2005A 001232, filed on 30th June 2005.
